# EUROPEAN PATENT SPECIFICATION

(11) **EP 3 702 208 B1**
(45) Date of publication and mention of the grant of the patent: **03.05.2023**
(21) Application number: 18919295.8
(22) Date of filing: 15.12.2018
(51) Int. Cl.: B60N 2/28

(54) **CAR SAFETY SEAT**
SICHERHEITSSITZ FÜR FAHRZEUG
SIÈGE DE SÉCURITÉ DE VOITURE

(30) Priority: 17.05.2018 CN 201820739304 U
(43) Date of publication of application: 02.09.2020
(73) Proprietor: Max-Inf (Ningbo) Baby Product Co., Ltd, Ningbo, Zhejiang 315100 (CN)
(72) Inventor: XU, Lihong, Ningbo, Zhejiang 315100 (CN); WANG, Youping, Ningbo, Zhejiang 315100 (CN); PAN, Xiaolu, Ningbo, Zhejiang 315100 (CN)
(74) Representative: Ipside
(86) International application number: PCT/CN2018/121352
(87) International publication number: WO 2019/218661

(56) References cited:
- AU-A1- 2006 203 692
- CN-A- 105 015 377
- CN-U- 204 279 148
- CN-U- 204 279 148
- CN-U- 205 365 305
- CN-U- 205 737 049
- CN-U- 206 914 178
- US-A1- 2012 292 963
- US-A1- 2016 039 319

## Description

### Technical Field

The present invention relates to a vehicle safety seat.

### Background of the Invention

At present, with the increasing parents' awareness of child safety in a vehicle, the use of child safety seats in vehicles becomes more and more popular. The design of child safety seats will greatly influence the use safety and comfort thereof.

Previous art patent document published under number US 20160039319 discloses a lateral protecting mechanism disposed on a lateral wing of a child safety seat. The lateral protecting mechanism includes a lateral protecting block and a protecting component. An end of the lateral protecting block is pivoted to the lateral wing. The lateral protecting block is movable between a using position and a folding position. The protecting component is slidably disposed on the other end of the lateral protecting block. The protecting component protrudes from a side of the lateral protecting block and is located between the lateral wing and the lateral protecting block when the lateral protecting block rotates away from the lateral wing and is located at the using position, and the protecting component is received in the side of the lateral protecting block when the lateral protecting block rotates toward the lateral wing and is located at the folding position.

### Summary of the Invention

The object of the present invention is to provide a vehicle safety seat, which is firmly connected to a vehicle seat and has the excellent safety performance.

The object of the present invention is achieved by a vehicle safety seat comprising the features of claim 1.

When the vehicle safety seat is installed on the vehicle seat, the vehicle safety seat is firstly connected to an anchor point on the vehicle by means of the ISOFIX device, then shoulder belts of the vehicle seat belt pass through the guide slots on the headrest, the belly belt of the vehicle seat belt passes between the two seat belt passages, and the shoulder belts and the belly belt of the seat belt join together and then are inserted into the anchor point on the vehicle seat for fixing. Since the shoulder belts of the vehicle seat belt are defined by the guide slots, and the belly belt of the vehicle seat belt is defined by the seat belt passages, the vehicle seat belt can better fit the vehicle safety seat, such that the vehicle safety seat can be held more stably on the vehicle seat. The vehicle safety seat provided by the present invention is further provided with side collision blocks on two sides of the seat portion, which can improve the safety performance of the vehicle safety seat and reduce the lateral movement of the vehicle safety seat during a collision.

Further, the vehicle safety seat further comprises two belly belt guides, wherein one end of each of the belly belt guides is fixed to the lower end of the respectively upper flanks, the other end thereof extends toward the respective lower flank, and a gap of a certain distance is provided between the belly belt guides and the lower flanks to allow the vehicle seat belt to enter the seat belt passages through the gap, such that the vehicle seat belt is held in the seat belt passages by the belly belt guides.

By means of providing the belly belt guides at the seat belt passages, the seat belt belly belt can be prevented, when the vehicle safety seat is subjected to a large impact force, from sliding out of the seat belt passages such that the seat belt cannot serve to fix the vehicle safety seat.

Further, the ISOFIX device comprises an ISOFIX connector, a guide rail, a lock member, and a secondary lock, wherein the guide rail is arranged at the base, the ISOFIX connector is slidably arranged at the guide rail, the lock member is used to lock or unlock the movement of the ISOFIX connector along the guide rail, and the secondary lock is used to lock or unlock the movement of the lock member, such that when the lock member is locked by the secondary lock, the lock member is unable to unlock the ISOFIX connector.

By means of additionally providing the secondary lock, the present invention avoids the accidental separation of the ISOFIX connector from the vehicle anchor point caused by accidental unlocking of the lock member, so as to improve the installation stability of the vehicle safety seat and reduce the probability of accidents.

Further, the vehicle safety seat further comprises a TT belt, wherein one end of the TT belt is fixed to an upper end of the seat back, the other end of the TT belt is provided with a connecting hook, the connecting hook is adapted to be connected to an anchor point on the vehicle, a bottom surface of the base has a connecting portion, and the connecting hook is adapted to be detachably mounted to the connecting portion, such that when the TT belt is not in use, the connecting hook is stored by the connecting portion. When the connecting hook is connected to the connecting portion, the TT belt is attached to a back surface of the seat back and a bottom surface of the base. The function of the TT is to further enhance the connection stability between the vehicle safety seat and the vehicle seat, especially the fixing of the upper end of the vehicle safety seat.

Further, the vehicle safety seat further comprises a spacer for adjusting the angle between the seat portion and the vehicle seat, wherein a first end of the spacer is movably hinged to the bottom surface of the base such that the spacer can move forward and backward relative to the base, and a second end of the spacer can turn up and down relative to the base; and the bottom surface of the base is provided with at least two positioning portions, the second end of the spacer is adapted to be detachably connected to the positioning portions, the positioning portions are sequentially arranged at the bottom of the base in a moving direction of the spacer, and the positioning portions are different in the vertical height, such that when the second end of the spacer is connected to the different positioning portions, the spacer forms different angles with the base.

By means of the spacer, the user can change the angle between the vehicle safety seat and the vehicle base as needed. The spacer has a simple structure, is low in manufacturing cost, and is not easy to damage. The inclination angle of the spacer is convenient to adjust, such that the user can adjust the angle conveniently and quickly.

Further, the headrest adjustment structure comprises:
a gear rail arranged at the seat back, the gear rail having a plurality of gear slots in a lengthwise direction;
a gear unit, which is movably arranged at the headrest, such that when the headrest moves up and down along the seat back, the gear unit is opposite to the gear slots in sequence, and when the gear unit is opposite to one of the gear slots, the gear unit is adapted to move into or away from the gear slot so as to lock or unlock the headrest;
an elastic element, which is arranged between the gear unit and the headrest, and is adapted to continuously apply an acting force to the gear unit to move the gear unit toward the gear slot so as to lock the headrest; and
an unlocking member comprising a fixed section, a deformation section, and a movable section, wherein two ends of the deformation section are respectively connected to the fixed section and the movable section, the fixed section is fixedly arranged at a lower end of the headrest, the movable section extends to an upper end of the headrest, the deformation section is opposite to the gear unit, the deformation section is elastically deformed by means of applying an external force to the movable section, and when the deformation section is elastically deformed, the gear unit is driven to move so as to unlock the headrest.

The movable section of the unlocking member is located at the upper end of the headrest. When a user needs to move the headrest, an acting force is directly applied to the movable section, and the deformation section is elastically deformed when the movable section moves, such that the headrest is unlocked. When a moving direction of the headrest is consistent with a moving direction of the movable section, the user can continue to apply an external force to the movable section so as to move the headrest; and when the moving direction of the movable section is opposite to the moving direction of the headrest, the user applies an external force to the movable section by fingers and then can apply an external force to the headrest by an elbow, the back of hand, or a palm so as to move the headrest. That is, the headrest adjustment structure of the present invention can be operated with one hand, such that the headrest can be adjusted conveniently and quickly.

Further, the side collision block is detachably mounted on the upper flank by means of a side collision block mounting structure which comprises a first connecting portion and a second connecting portion, wherein a rear end of the first connecting portion is connected to the upper flank, a front end of the first connecting portion protrudes out of the upper flank to form a connecting member, the second connecting portion is arranged at the side collision block, the second connecting portion has a mounting cavity matching the connecting member, and the connecting member is adapted to be inserted into the mounting cavity, such that the first connecting portion is detachably connected to the second connecting portion.

In the present invention, by means of designing the side collision block to be detachable, the side collision block can be replaced according to the need of use, improving the versatility of the vehicle seat, or the side collision block can also be replaced in time when the side collision block is damaged. In addition, the height of the headrest can be adjusted according to the height of a child, ensuring the comfort and safety of the headrest.

### Brief Description of the Drawings

Fig. 1 is a schematic diagram of one preferred embodiment of a vehicle safety seat of the present invention;
Fig. 2 is a schematic diagram of one preferred embodiment of a vehicle safety seat of the present invention, showing a bottom surface of a vehicle safety seat;
Fig. 3 is an exploded schematic diagram of one preferred embodiment of a secondary lock of an ISOFIX device of the present invention;
Fig. 4 is a cross-sectional diagram of one preferred embodiment of a secondary lock of an ISOFIX device of the present invention, showing the secondary lock button being in a locked position, and a lock member being in a locked position;
Fig. 5 is a cross-sectional diagram of one preferred embodiment of a secondary lock of an ISOFIX device of the present invention, showing the secondary lock button being in an unlocked position, and a lock member being in an unlocked position;
Fig. 6 is a partial enlarged view of Fig. 2, showing a state where a connecting hook is connected to a connecting portion;
Fig. 7 is a partial cross-sectional schematic diagram of one preferred embodiment of a vehicle safety seat of the present invention, showing a state where a spacer is connected to a positioning portion;
Fig. 8 is a partial cross-sectional schematic diagram of one preferred embodiment of a vehicle safety seat of the present invention, showing a state where a spacer is connected to another positioning portion;
Fig. 9 is a partial exploded diagram of one preferred embodiment of a vehicle safety seat of the present invention, showing a headrest adjustment structure;
Fig. 10 is a partial cross-sectional schematic diagram of one preferred embodiment of a vehicle safety seat of the present invention, showing a state where a gear unit is in a gear slot;
Fig. 11 is a partial enlarged view of Fig. 10;
Fig. 12 is a partial cross-sectional schematic diagram of one preferred embodiment of a vehicle safety seat of the present invention, showing a state where a gear unit is away from a gear slot;
Fig. 13 is a partial enlarged view of Fig. 12;
Fig. 14 is a schematic diagram of a side collision block mounting structure of a vehicle safety seat of the present invention, showing a state where a first connecting portion is separated from a second connecting portion; and
Fig. 15 is a schematic diagram of a side collision block mounting structure, showing a state where a first connecting portion is connected to a second connecting portion.

In the figures: 1. seat part; 11. seat back; 12. base; 13. upper flank; 14. lower flank; 15. seat belt passage; 2. ISOFIX device; 21. ISOFIX connector; 22. guide rail; 23. lock member; 24. secondary lock; 242. button base; 243. button reset member; 244. secondary lock button; 2441. stop portion; 2442. pressing portion; 245. secondary lock reset member; 3. headrest; 30. guide slot; 31. mounting base; 310. base mounting cavity; 4. side collision block; 5. belly belt guide; 61. TT belt; 62. connecting hook; 63. connecting portion; 71. spacer; 72. positioning portion; 73. holding element; 81. gear rail; 810. gear slot; 82. gear unit; 821. gear movable member; 822. gear lever; 83. unlocking member; 831. fixed section; 832. deformation section; 833. movable section; 84. elastic element; 91. first connecting portion; 911. connecting member; 92. second connecting portion; 920. mounting cavity; 921. snap-in member; 912. first limiting member; and 10. adjuster button.

### Detailed Description of Embodiments

Hereinafter, the present invention will be further described in conjunction with the accompanying drawings and the specific embodiments, and it should be noted that, on the premise of no conflict, the embodiments or the technical features described below could be combined arbitrarily to form a new embodiment.

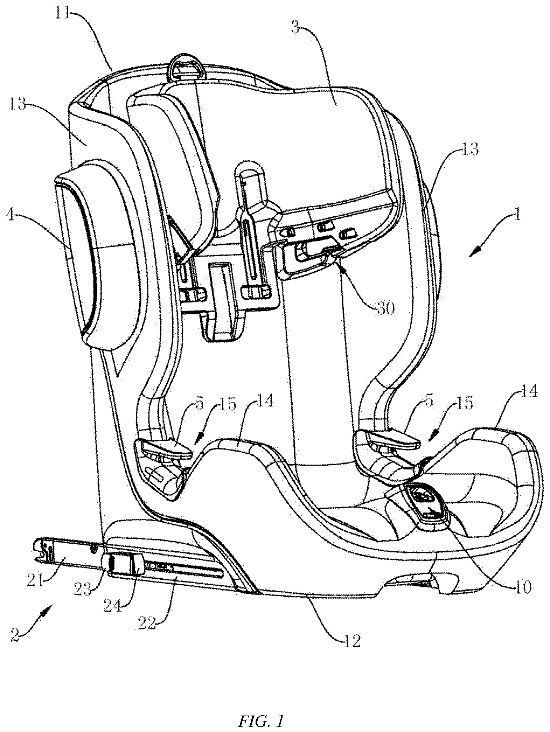

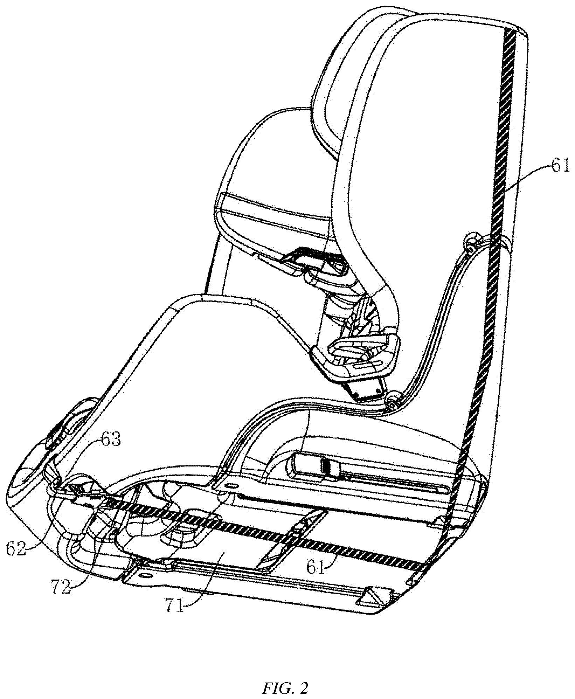

As shown in Figs. 1 and 2, the present invention provides a vehicle safety seat, comprising a seat portion 1, an ISOFIX device 2, a headrest 3, two side collision blocks 4, and two belly belt guides 5.

The seat portion 1 comprises a seat back 11, a base 12, two upper flanks 13 formed by extending forward from two sides of the seat back 11, and two lower flanks 14 formed by extending upward from two sides of the base 12. Seat belt passages 15 are provided between the upper flanks 13 and the lower flanks 14 to allow a belly belt of the vehicle seat belt to pass through.

The ISOFIX device 2 is arranged at the base 12 and is used to be connected to an anchor point on the vehicle seat.

The headrest 3 is arranged, with the height being adjustable, on the seat back 11 by means of a headrest adjustment structure. Lower ends of two sides of the headrest 3 are respectively provided with a guide slot 30, and the vehicle seat belt is adapted to pass through the guide slots 30, so as to fix the upper half of the vehicle safety seat.

The two side collision blocks 4 are respectively detachably mounted on outer sides of the two upper flanks 13, and are adapted to absorb the impact energy when the vehicle is subjected to a lateral collision, thereby reducing the lateral movement of the vehicle safety seat.

One ends of the two belly belt guides 5 are respectively fixed to lower ends of the two upper flanks 13, the other ends thereof extend toward the respective lower flanks 14, and a gap of a certain distance is provided between the belly belt guides 5 and the lower flanks 14 to allow the vehicle seat belt to enter the seat belt passage 15 through the gap, so as to fix the lower half of the vehicle safety seat. Furthermore, the vehicle seat belt can be stably held in the seat belt passages 15 by means of the belly belt guides 5 to prevent the vehicle seat belt from moving under a great impact force.

Further, the ISOFIX device 2 comprises an ISOFIX connector 21, a guide rail 22, a lock member 23, and a secondary lock 24. The guide rail 22 is arranged at the base 12, the ISOFIX connector 21 is slidably arranged at the guide rail 22, the lock member 23 is used to lock or unlock the movement of the ISOFIX connector 21 along the guide rail 22, and the secondary lock 24 is used to lock or unlock the movement of the lock member 23, such that when the lock member 23 is locked by the secondary lock 24, the lock member 23 is unable to unlock the ISOFIX connector 21.

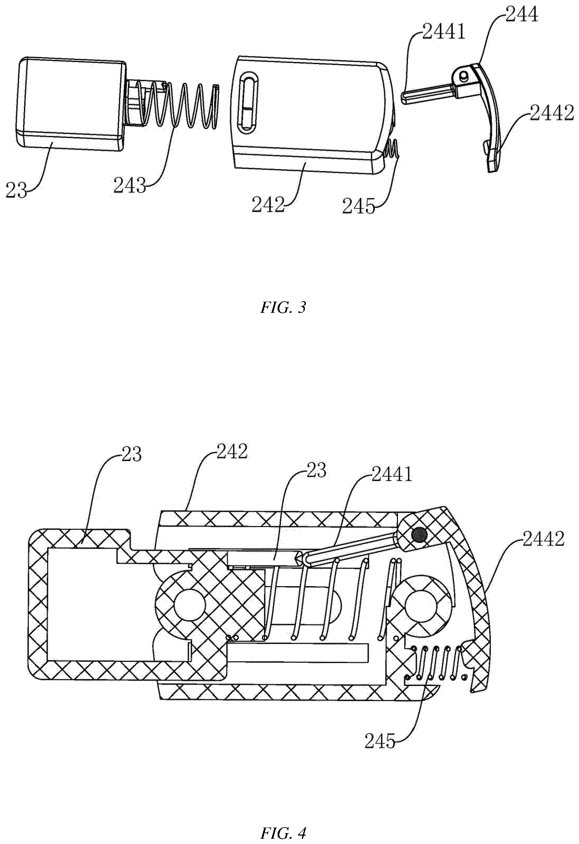

There are several embodiments for the secondary lock 24, Figs. 3, 4, and 5 provide one specific embodiment as a reference, and it should be understood that the specific structure of the secondary lock 24 of the present invention is not limited to this specific embodiment.

As shown in Figs. 3-5, the secondary lock 24 comprises a button base 242, a button reset member 243, a secondary lock button 244, and a secondary lock reset member 245.

The button base 242 is fixedly arranged on the ISOFIX connector 21, the button base 242 has an inner cavity, and the lock member 23 is movably arranged in the inner cavity, such that the lock member 23 moves between an unlocked position and a locked position. When the lock member 23 is in the unlocked position, the ISOFIX connector 21 is adapted to move along the guide rail 22; and when the lock member 23 is in the locked position, the ISOFIX connector 21 is unable to move along the guide rail 22. It is to be noted that the lock member 23 and the ISOFIX connector 21 belong to the prior art in the art, and those skilled in the art could implement locking or unlocking of the ISOFIX connector 21 by the lock member 23 according to the prior art, which is not described in detail here.

The button reset member 243 is arranged between the button base 242 and the lock member 23, and is adapted to continuously apply an acting force to the lock member 23 to hold it in the locked position. That is, when there is no external force, the lock member 23 is held in the locked position by the button reset member 243.

The secondary lock button 244 is hinged to the button base 242 such that the secondary lock button 244 turns between a locked position and an unlocked position. The secondary lock button 244 comprises a stop portion 2441 and a pressing portion 2442. When the secondary lock button 244 is in the locked position, the stop portion 2441 comes into contact with the lock member 23 that is also in the locked position, such that the lock member 23 is unable to move under the restriction of the stop portion 2441; and when the secondary lock button 244 turns to the unlocked position, the stop portion 2441 is separated from the lock member 23, and then the lock member 23 can move from the locked position to the unlocked position under an external force.

The secondary lock reset member 245 is arranged between the pressing portion 2442 and the button base 242, and is adapted to continuously apply an acting force to the secondary lock button 244 to hold it in the locked position. That is, when there is no external force, the secondary lock button 244 is held in the locked position by the secondary lock reset member 245. When the ISOFIX connector 21 needs to be unlocked, an user turns the secondary lock button 244 from the locked position to the unlocked position by means of the pressing portion 2442, and simultaneously presses the lock member 23 to move it from the locked position to the unlocked position, such that the ISOFIX connector 21 can move along the guide rail 22.

Further, the vehicle safety seat further comprises a TT belt 61, with one end of the TT belt 61 being fixed to an upper end of the seat back 11, and the other end thereof being provided with a connecting hook 62, and the connecting hook 62 is adapted to be connected to an anchor on the vehicle.

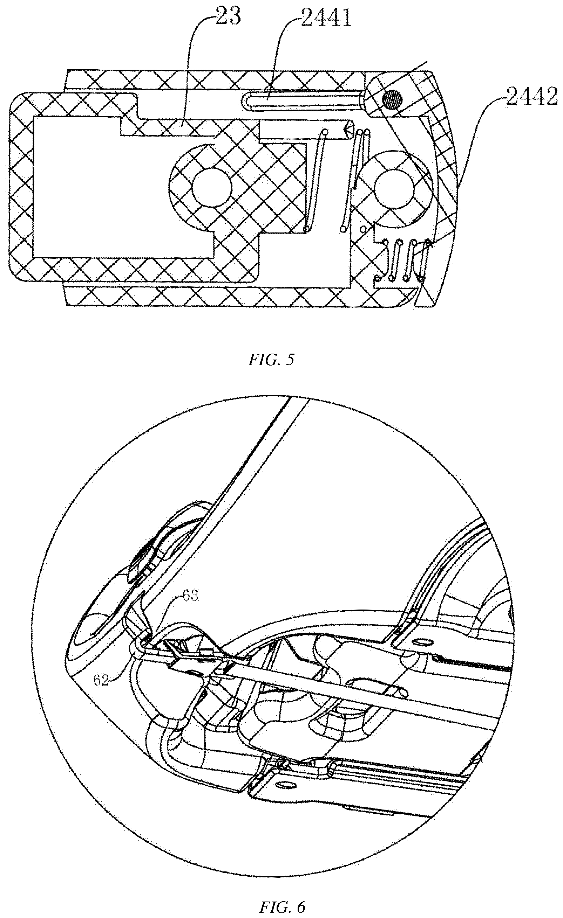

As shown in the enlarged view of Fig. 6, a bottom surface of the base 12 has a connecting portion 63, the connecting hook 62 is adapted to be detachably hooked to the connecting portion 63, and when the TT belt 61 is not in use, the TT belt can be stored by means of the connecting hook 62 being hooked onto the connecting portion 63, and then the TT belt 61 is attached to a back surface of the seat back 11 and the bottom surface of the base 12.

Preferably, the connecting portion 63 is a catching rod.

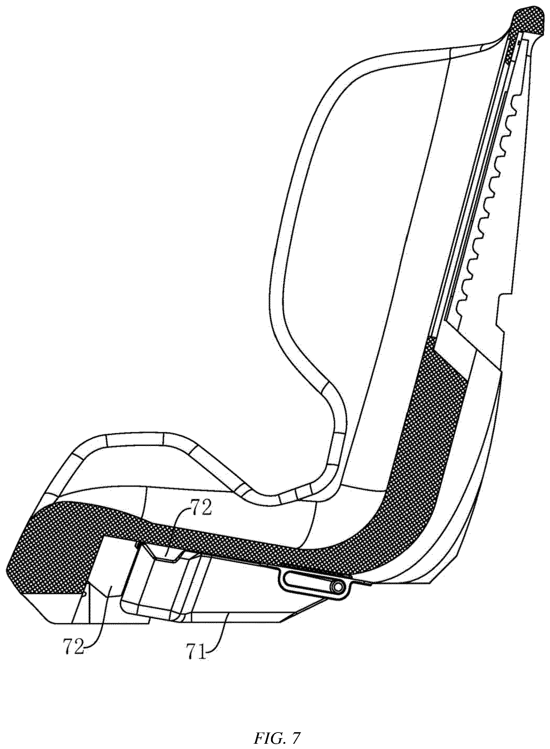

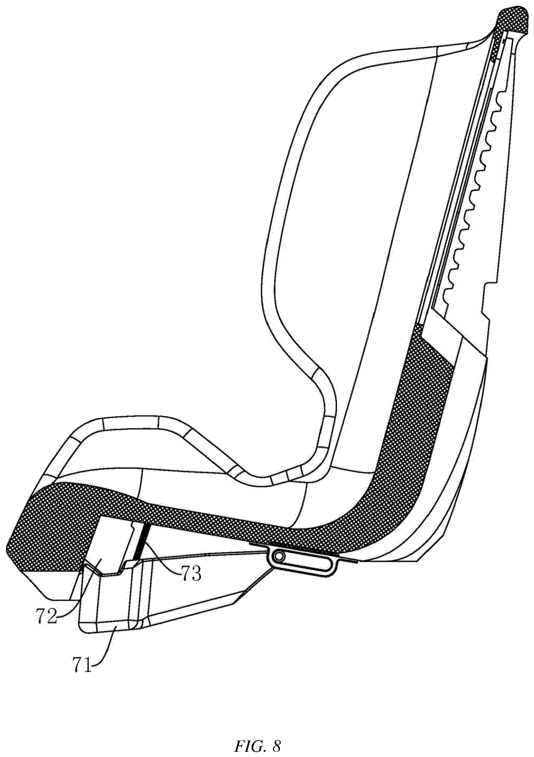

Further, as shown in Figs. 7 and 8, the vehicle safety seat further comprises a spacer 71 for adjusting the angle between the seat portion 1 and the vehicle seat. A first end of the spacer 71 is movably hinged to the bottom surface of the base 12 such that the spacer 71 can move forward and backward relative to the base 12, and a second end of the spacer 71 can turn up and down relative to the base 12. The bottom surface of the base 12 is provided with at least two positioning portions 72, the second end of the spacer 71 is adapted to be detachably connected to the positioning portions 72, the positioning portions 72 are sequentially arranged on the bottom of the base 12 in a moving direction of the spacer 71, and the positioning portions 72 are different in vertical height, such that when the second end of the spacer 71 is connected to different positioning portions 72, the spacer 71 forms different angles with the base 12.

The bottom surface of the base 12 is provided with a connecting rail that extends in a front- and-rear direction of the bottom surface of the base 11, the first end of the spacer 71 is provided with a cylindrical connecting member, the connecting member is movably arranged in the connecting rail such that the connecting member is adapted to move along the connecting rail, and the connecting member is adapted to turn within the connecting rail.

There are several embodiments for the connection between the positioning portion 72 and the second end of the spacer 71, such as hooking, snap-in fastening, and magnetic attraction.

Figs. 7 and 8 provide a specific embodiment as reference, and it should be understood that the specific structures of the positioning portion 72 and the spacer 71 of the present invention are not limited to this specific embodiment.

As shown in Figs. 7 and 8, the positioning portion 72 extends downward from the bottom surface of the base 12 to form at least one protruding portion, the second end of the spacer 71 forms snap-in slots corresponding to the protruding portions, and the protruding portions are adapted to be inserted into the snap-in slots, such that the positioning portion 72 is connected to the second end of the spacer 71. A holding element 73 is further provided between the base 12 and the spacer 71, and the holding element 73 continuously applies an upward force to the second end of the spacer 71 so as to prevent the spacer 71 from being separated from the positioning portion 72 caused by its own gravity. The bottom surface of the spacer 71 has a groove to facilitate the user to apply an acting force to the spacer 71 by means of the groove.

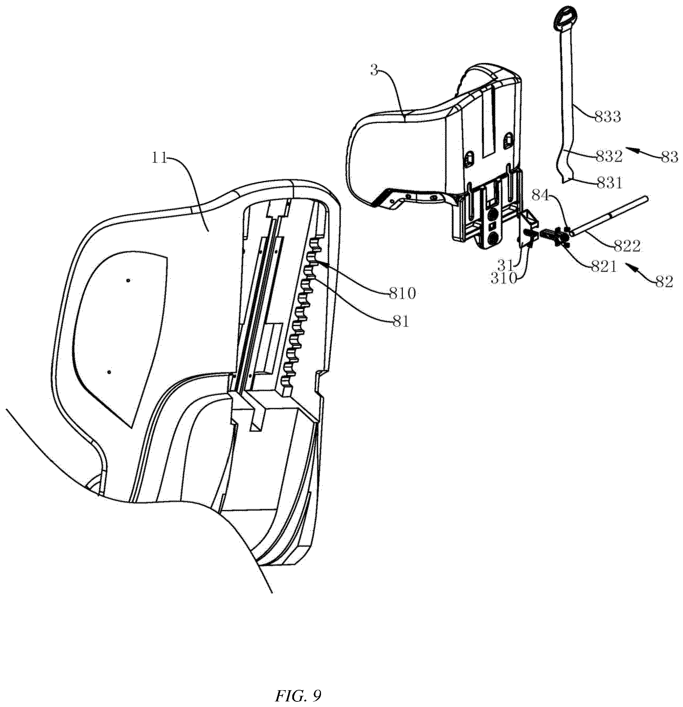

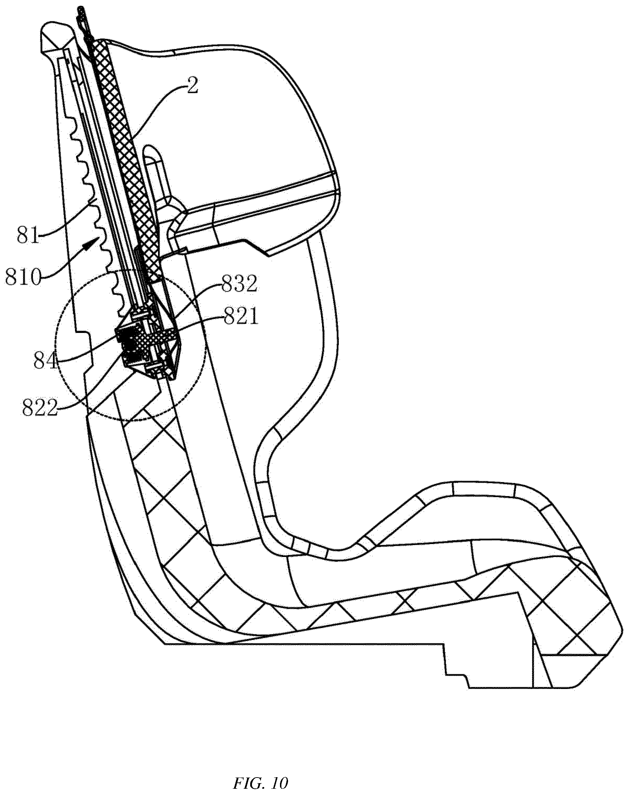

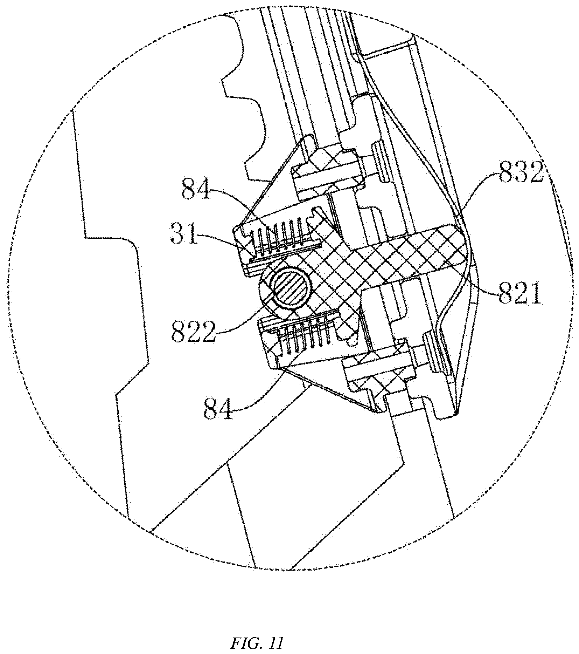

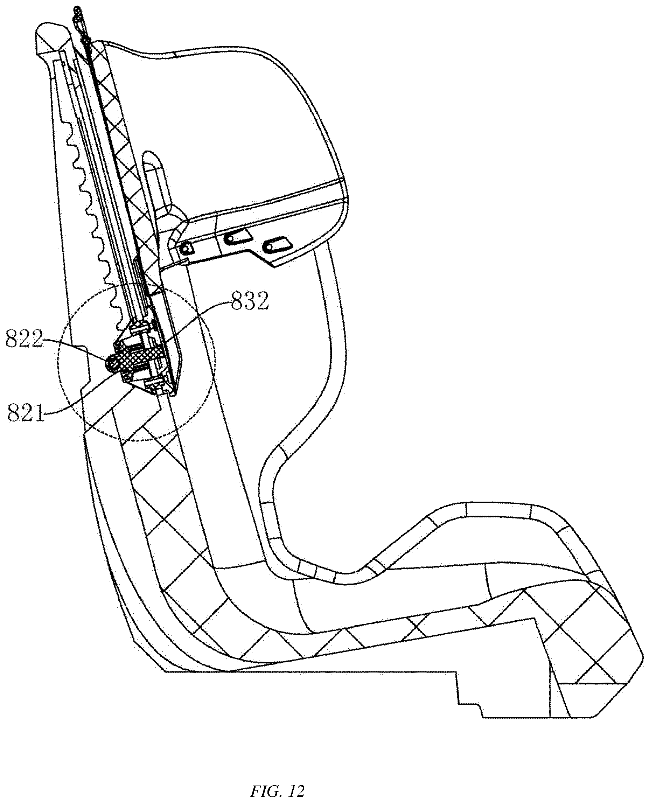

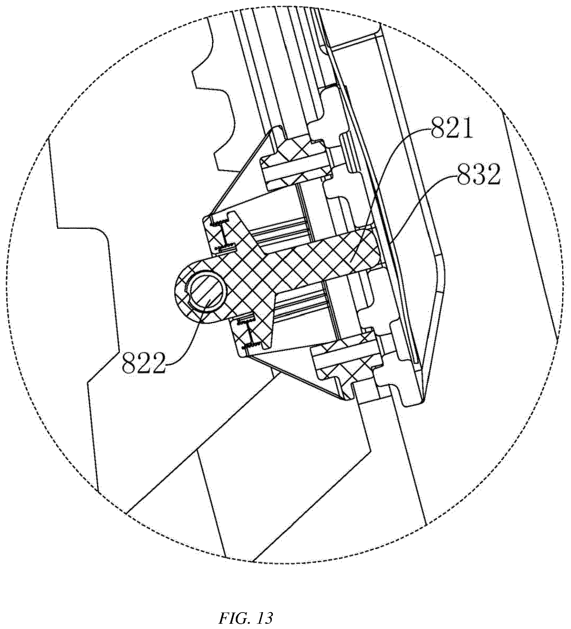

Further, as shown in Figs. 9-13, the headrest adjustment structure comprises a gear rail 81, a gear unit 82, an unlocking member 83, and an elastic element 84.

The gear rail 81 is arranged on the seat back 11, and has a plurality of gear slots 810 in a lengthwise direction.

The gear unit 82 is movably arranged at the headrest 3, such that when the headrest 3 moves up and down along the seat back 11, the gear unit 82 is opposite to the respective gear slot 810 on the gear rail 81 in sequence, and when the gear unit 82 is opposite to the gear slot 810, the gear unit 82 can move into or away from the gear slot 810. The elastic element 84 is arranged between the gear unit 82 and the headrest 3, and is adapted to continuously apply an acting force to the gear unit 82 to move the gear unit toward the gear slot 810, such that when the gear unit 82 is opposite to a gear slot 810, the gear unit 82 is held in the gear slot 810 by the elastic element 84, and then the headrest 3 is limited at the gear by the gear unit 82 and is unable to move up and down.

The unlocking member 83 comprises a fixed section 831, a deformation section 832, and a movable section 833, two ends of the deformation section 832 are respectively connected to the fixed section 831 and the movable section 833, the fixed section 831 is fixedly arranged at a lower end of the headrest 3, and the movable section 833 is vertically movably arranged at an upper end of the headrest 3, and the deformation section 832 is adapted to be elastically deformed. The deformation section 832 is opposite to the gear unit 82. When the movable section 833 moves upward under an external force, the deformation section 832 is elastically deformed, and at the same time applies an external force to the gear unit 82 to overcome the acting force of the elastic element 84, such that the gear unit 82 moves to a position away from the gear slot 810 under the action of the deformation section 832, and then the headrest 3 is not limited by the gear and can move up and down. When the headrest 3 moves to a suitable position, the external force applied to the movable section 833 is removed, the deformation of the deformation section 832 is restored, and the gear unit 82 also moves into the respective gear slot 810 under the action of the elastic element 84, so as to hold the headrest 3 in this position.

The headrest 3 is provided with a mounting base 31, and the mounting base 31 has a base mounting cavity 310. The gear unit 82 comprises a gear movable member 821 and a gear lever 822, the gear movable member 821 is movably arranged in the base mounting cavity 310, the gear lever 822 is arranged at an outer end of the gear movable member 821, the gear lever 822 is opposite to the gear slot 810 on the gear rail 81, and when the gear movable member 821 moves along the base mounting cavity 310, the gear lever 822 moves into the gear slot 810 or away from the gear slot 810.

One end of the elastic element 84 abuts against the mounting base 31 and the other end thereof abuts against the gear movable member 821, and the elastic element is adapted to continuously apply an acting force to the gear movable member 821 to hold the gear lever 822 within the gear slot 810.

The deformation section 832 is a metal sheet bent in the middle, the middle of the deformation section 832 is arched toward the front of the seat back 11, the gear movable member 821 is located behind the deformation section 832, and an inner end of the gear movable member 821 comes into contact with the arched portion of the deformation section 832. When the movable section 833 moves upward under an external force, the arched portion of the deformation section 832 is straightened and moved toward one side of the gear movable member 821, so as to apply a force to the gear movable member 821 to move outward, such that the gear lever 822 is separated from the gear slot 810, and then the headrest 3 is unlocked and can freely move up and down; and when the external force on the movable section 833 is removed, the deformation of the deformation section 832 is restored, then the gear movable member 821 moves inward under the action of the elastic element 84, such that the gear lever 822 snaps into the respective gear slot 810, and then the headrest 3 is locked and is unable to freely move up and down.

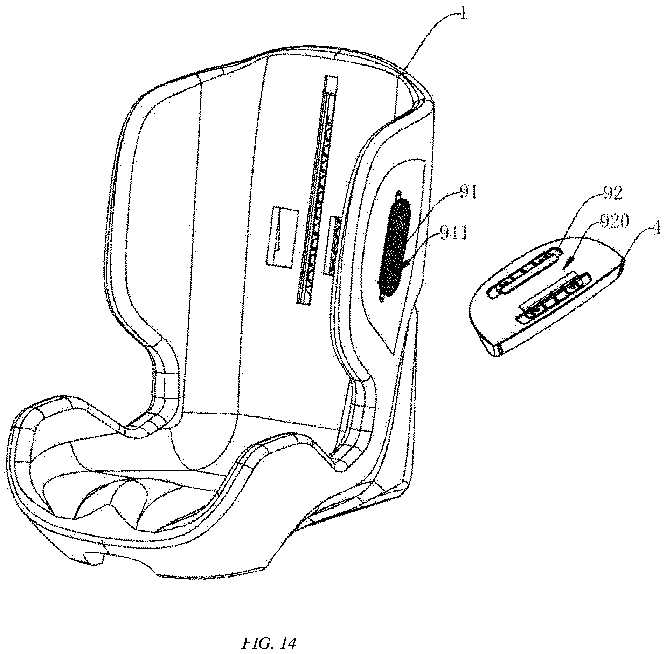

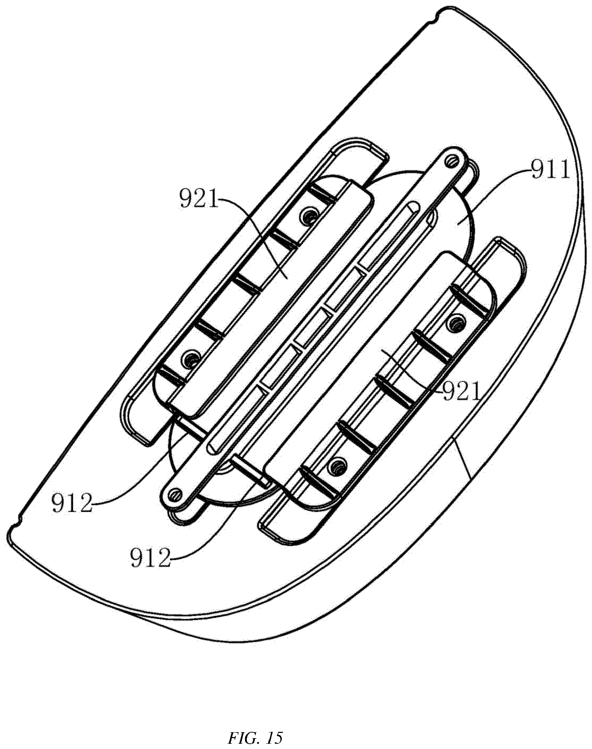

Further, as shown in Figs. 14 and 15, the side collision block 4 is detachably mounted on the upper flank 13 by means of the side collision block mounting structure. The side collision block mounting structure comprises a first connecting portion 91 and a second connecting portion 92. A rear end of the first connecting portion 91 is connected to the upper flank 13, and a front end of the first connecting portion 91 protrudes out of the upper flank 13 to form a connecting member 911. The second connecting portion 92 is arranged on the side collision block 4, the second connecting portion 92 has a mounting cavity 920 matching the connecting member 911, and the connecting member 911 is adapted to be inserted into the mounting cavity 920 such that the first connecting portion 91 is detachably connect to the second connecting portion 92.

The connecting member 911 has an elongated structure, the second connecting portion 92 comprises two snap-in members 921 arranged symmetrically, the snap-in member 921 has an L-shaped cross section, rear ends of the two snap-in members 921 are arranged at the side collision blocks 4, and front ends of the two snap-in members 921 extend toward each other, so as to form a mounting cavity 920 between the two snap-in members 921. The connecting member 911 is adapted to be inserted into the mounting cavity 920 from upper or lower ends of the two snap-in members 921.

A limiting structure is further provided between the connecting member 911 and the two snap-in members 921 to prevent the connecting member 911 from being easily separated from the snap-in members 921. The limiting structure is a first limiting member 912 arranged at a lower end of the connecting member 911, and the width of the first limiting member 912 is greater than the distance between the two snap-in members 921, such that when the connecting member 911 is inserted between the two snap-in members 921, the limiting member 912 abuts against the lower ends of the two snap-in members 921 to prevent the snap-in members 921 from sliding down along the connecting member 911 caused by the gravity of the side collision block 4 itself.

Further, a front end of the base 12 is further fixedly provided with an adjuster button 10, the adjuster button 10 is used to adjust the length of the seat belt on the vehicle safety seat.

It should be noted that the specific structure of the adjuster button 10 belongs to the prior art, and will not be described in detail in the present invention.

## Claims

1. A vehicle safety seat, **characterized by** comprising:
a seat portion (1) comprising a seat back (11), a base (12), two upper flanks (13) formed by extending forward from two sides of the seat back (11), and two lower flanks (14) formed by extending upward from two sides of the base (12), with seat belt passages (15) being provided between the upper flanks (13) and the lower flanks (14) to allow a belly belt of a vehicle seat belt to pass through;
an ISOFIX device (2) arranged at the base (12) and used to be connected to an anchor point on the vehicle seat, comprising an ISOFIX connector (21), a guide rail (22), a lock member (23),
and a secondary lock (24), wherein the guide rail (22) is arranged at the base (12), the ISOFIX connector (21) is slidably arranged at the guide rail (22), the lock member (23) is used to lock or unlock the movement of the ISOFIX connector (21) along the guide rail (22), and the secondary lock (24) is used to lock or unlock the movement of the lock member (23), such that when the lock member is locked by the secondary lock (24), the lock member (23) is unable to unlock the ISOFIX connector (21);
a headrest (3) arranged, with the height being adjustable, on the seat back by means of a headrest adjustment structure, with lower ends of two sides of the headrest being respectively provided with a guide slot (30) such that the vehicle seat belt is adapted to pass through the guide slot; and
two side collision blocks (4) respectively detachably mounted on outer sides of the two upper flanks (13).

2. The vehicle safety seat according to claim 1, **characterized by** further comprising two belly belt guides (5), wherein one ends of the two belly belt guides are respectively fixed to lower ends of the two upper flanks (13), the other ends thereof extend toward the respective lower flanks (14), and a gap of a certain distance is provided between the belly belt guides (5) and the lower flanks (14) to allow the vehicle seat belt to enter the seat belt passages (15) through the gap, such that the vehicle seat belt is held in the seat belt passages (15) by the belly belt guides (5).

3. The vehicle safety seat according to claim 1, **characterized in that** the vehicle safety seat further comprises a TT belt (61), wherein one end of the TT belt is fixed to an upper end of the seat back (11), the other end of the TT belt is provided with a connecting hook (62), the connecting hook is adapted to be connected to an anchor point on the vehicle, a bottom surface of the base (12) has a connecting portion, and the connecting hook (62) is adapted to be detachably mounted to the connecting portion, such that when the TT belt (61) is not in use, the connecting hook (62) is stored by the connecting portion.

4. The vehicle safety seat according to claim 1, **characterized in that** the vehicle safety seat further comprises a spacer (71) for adjusting the angle between the seat portion (1) and the vehicle seat, wherein a first end of the spacer is movably hinged to the bottom surface of the base (12) such that the spacer (71) can move forward and backward relative to the base (12), and a second end of the spacer (71) can turn up and down relative to the base; and the bottom surface of the base is provided with at least two positioning portions (72), the second end of the spacer (71) is adapted to be detachably connected to the positioning portions (72), the positioning portions (72) are sequentially arranged at the bottom of the base in a moving direction of the spacer (71), and the positioning portions are different in the vertical height, such that when the second end of the spacer (71) is connected to the different positioning portions (72), the spacer forms different angles with the base.

5. The vehicle safety seat according to any one of claims 1-4, **characterized in that** the headrest adjustment structure comprises:
a gear rail (81) arranged at the seat back (11), the gear rail having a plurality of gear slots (810) in a lengthwise direction;
a gear unit (82), which is movably arranged at the headrest (3), such that when the headrest moves up and down along the seat back (11), the gear unit (82) is opposite to the gear slots (810) in sequence, and when the gear unit (82) is opposite to one of the gear slots (810), the gear unit is adapted to move into or away from the gear slot so as to lock or unlock the headrest (3);
an elastic element (84), which is arranged between the gear unit (82) and the headrest (3), and is adapted to continuously apply an acting force to the gear unit (82) to move the gear unit toward the gear slot (810) so as to lock the headrest (3); and
an unlocking member (83) comprising a fixed section (831), a deformation section (832), and a movable section (833), wherein two ends of the deformation section (832) are respectively connected to the fixed section (831) and the movable section (833), the fixed section (831) is fixedly arranged at a lower end of the headrest (3), the movable section (833) extends to an upper end of the headrest (3), the deformation section (832) is opposite to the gear unit (82), the deformation section (832) is elastically deformed by means of applying an external force to the movable section (833), and when the deformation (832) section is elastically deformed, the gear unit (82) is driven to move so as to unlock the headrest (3).

6. The vehicle safety seat according to any one of claims 1-4, **characterized in that** the side collision block (4) is detachably mounted on the upper flank (13) by means of a side collision block mounting structure which comprises a first connecting portion (91) and the second connecting portion (92), wherein a rear end of the first connecting portion (91) is connected to the upper flank (13), a front end of the first connecting portion protrudes out of the upper flank (13) to form a connecting member (911), the second connecting portion (92) is arranged at the side collision block (4), the second connecting portion (92) has a mounting cavity (920) matching the connecting member (911), and the connecting member (911) is adapted to be inserted into the mounting cavity, such that the first connecting portion (91) is detachably connected to the second connecting portion (92).

## Patentansprüche

1. Fahrzeugsicherheitssitz, **dadurch gekennzeichnet, dass** er Folgendes umfasst:
einen Sitzabschnitt (1), der eine Sitzrückenlehne (11), eine Basis (12), zwei obere Flanken (13), die dadurch gebildet werden, dass sie sich von zwei Seiten der Sitzrückenlehne (11) aus nach vorne erstrecken, und zwei untere Flanken (14), die dadurch gebildet werden, dass sie sich von zwei Seiten der Basis (12) aus nach oben erstrecken, umfasst, wobei zwischen den oberen Flanken (13) und den unteren Flanken (14) Sicherheitsgurtdurchgänge (15) bereitgestellt werden, durch die ein Bauchgurt eines Fahrzeugsicherheitsgurtes geführt werden kann;
eine ISOFIX-Vorrichtung (2), die an der Basis (12) angeordnet ist und dazu verwendet wird, mit einem Verankerungspunkt am Fahrzeugsitz verbunden zu werden, umfassend einen ISOFIX-Verbinder (21), eine Führungsschiene (22), ein Verriegelungselement (23) und eine sekundäre Verriegelung (24), wobei die Führungsschiene (22) an der Basis (12) angeordnet ist, der ISOFIX-Verbinder (21) verschiebbar an der Führungsschiene (22) angeordnet ist, das Verriegelungselement (23) verwendet wird, um die Bewegung des ISOFIX-Verbinders (21) entlang der Führungsschiene (22) zu verriegeln oder zu entriegeln, und die sekundäre Verriegelung (24) verwendet wird, um die Bewegung des Verriegelungselements (23) zu verriegeln oder zu entriegeln, sodass, wenn das Verriegelungselement durch die sekundäre Verriegelung (24) verriegelt ist, das Verriegelungselement (23) nicht in der Lage ist, den ISOFIX-Verbinder (21) zu entriegeln;
eine Kopfstütze (3), die mittels einer Kopfstützeneinstellstruktur höhenverstellbar an der Sitzrückenlehne angeordnet ist, wobei die unteren Enden von zwei Seiten der Kopfstütze jeweils mit einem Führungsschlitz (30) bereitgestellt sind, sodass der Fahrzeugsicherheitsgurt dazu ausgelegt ist, durch den Führungsschlitz zu verlaufen; und
zwei seitliche Kollisionsblöcke (4), die jeweils abnehmbar an den Außenseiten der beiden oberen Flanken (13) montiert sind.

2. Fahrzeugsicherheitssitz nach Anspruch 1, **dadurch gekennzeichnet, dass** er ferner zwei Bauchgurtführungen (5) umfasst, wobei die einen Enden der beiden Bauchgurtführungen jeweils an den unteren Enden der beiden oberen Flanken (13) befestigt sind und ihre anderen Enden sich zu den jeweiligen unteren Flanken (14) erstrecken, und ein Spalt mit einem bestimmten Abstand zwischen den Bauchgurtführungen (5) und den unteren Flanken (14) bereitgestellt wird, damit der Fahrzeugsicherheitsgurt durch den Spalt in die Sicherheitsgurtdurchgänge (15) eintreten kann, sodass der Fahrzeugsicherheitsgurt in den Sicherheitsgurtdurchgängen (15) durch die Bauchgurtführungen (5) gehalten wird.

3. Fahrzeugsicherheitssitz nach Anspruch 1, **dadurch gekennzeichnet, dass** der Fahrzeugsicherheitssitz ferner einen TT-Gurt (61) umfasst, wobei ein Ende des TT-Gurtes an einem oberen Ende der Sitzrückenlehne (11) befestigt ist, das andere Ende des TT-Gurtes mit einem Verbindungshaken (62) bereitgestellt ist, der Verbindungshaken ausgelegt ist, um mit einem Verankerungspunkt am Fahrzeug verbunden zu werden, eine untere Oberfläche der Basis (12) einen Verbindungsabschnitt aufweist, und der Verbindungshaken (62) ausgelegt ist, um abnehmbar an dem Verbindungsabschnitt montiert zu werden, sodass, wenn der TT-Gurt (61) nicht in Gebrauch ist, der Verbindungshaken (62) im Verbindungsabschnitt gelagert wird.

4. Fahrzeugsicherheitssitz nach Anspruch 1, **dadurch gekennzeichnet, dass** der Fahrzeugsicherheitssitz ferner einen Abstandshalter (71) zur Einstellung des Winkels zwischen dem Sitzabschnitt (1) und dem Fahrzeugsitz umfasst, wobei ein erstes Ende des Abstandshalters beweglich an der unteren Oberfläche der Basis (12) angelenkt ist, sodass der Abstandshalter (71) sich relativ zur Basis (12) vorwärts und rückwärts bewegen kann, und ein zweites Ende des Abstandshalters (71) sich relativ zur Basis auf und ab drehen kann; und die untere Oberfläche der Basis mit mindestens zwei Positionierungsabschnitten (72) bereitgestellt wird, das zweite Ende des Abstandshalters (71) so ausgelegt ist, dass es lösbar mit den Positionierungsabschnitten (72) verbunden werden kann, die Positionierungsabschnitte (72) nacheinander an der Unterseite der Basis in einer Bewegungsrichtung des Abstandshalters (71) angeordnet sind und die Positionierungsabschnitte sich in der vertikalen Höhe unterscheiden, sodass, wenn das zweite Ende des Abstandshalters (71) mit den verschiedenen Positionierungsabschnitten (72) verbunden ist, der Abstandshalter unterschiedliche Winkel mit der Basis bildet.

5. Fahrzeugsicherheitssitz nach einem der Ansprüche 1-4, **dadurch gekennzeichnet, dass** die Kopfstützeneinstellstruktur Folgendes umfasst:
eine an der Sitzrückenlehne (11) angeordnete Zahnradschiene (81), wobei die Zahnradschiene in Längsrichtung eine Vielzahl von Zahnradschlitzen (810) aufweist;
eine Zahnradeinheit (82), die beweglich an der Kopfstütze (3) angeordnet ist, sodass, wenn sich die Kopfstütze entlang der Sitzrückenlehne (11) auf und ab bewegt, die Zahnradeinheit (82) den Zahnradschlitzen (810) in der Folge gegenübersteht, und wenn die Zahnradeinheit (82) einem der Zahnradschlitze (810) gegenübersteht, die Zahnradeinheit so ausgelegt ist, dass sie sich in den Zahnradschlitz hinein oder von ihm weg bewegt, um die Kopfstütze (3) zu verriegeln oder zu entriegeln;
ein elastisches Element (84), das zwischen der Zahnradeinheit (82) und der Kopfstütze (3) angeordnet ist und so ausgelegt ist, dass es kontinuierlich eine wirkende Kraft auf die Zahnradeinheit (82) ausübt, um die Zahnradeinheit in Richtung des Getriebeschlitzes (810) zu bewegen, um die Kopfstütze (3) zu verriegeln; und
ein Entriegelungselement (83), umfassend einen festen Abschnitt (831), einen Verformungsabschnitt (832) und einen beweglichen Abschnitt (833), wobei zwei Enden des Verformungsabschnitts (832) jeweils mit dem festen Abschnitt (831) und dem beweglichen Abschnitt (833) verbunden sind, der feste Abschnitt (831) fest an einem unteren Ende der Kopfstütze (3) angeordnet ist, der bewegliche Abschnitt (833) sich zu einem oberen Ende der Kopfstütze (3) erstreckt, der Verformungsabschnitt (832) der Zahnradeinheit (82) gegenüberliegt, der Verformungsabschnitt (832) durch Aufbringen einer äußeren Kraft auf den beweglichen Abschnitt (833) elastisch verformt wird und, wenn der Verformungsabschnitt (832) elastisch verformt ist, die Zahnradeinheit (82) angetrieben wird, um sich zu bewegen, um die Kopfstütze (3) zu entriegeln.

6. Fahrzeugsicherheitssitz nach einem der Ansprüche 1-4, **dadurch gekennzeichnet, dass** der Seitenaufprallblock (4) mittels einer Seitenaufprallblock-Montagestruktur, die einen ersten Verbindungsabschnitt (91) und den zweiten Verbindungsabschnitt (92) umfasst, abnehmbar an der oberen Flanke (13) montiert ist, wobei ein hinteres Ende des ersten Verbindungsabschnitts (91) mit der oberen Flanke (13) verbunden ist, ein vorderes Ende des ersten Verbindungsabschnitts aus der oberen Flanke (13) herausragt, um ein Verbindungselement (911) zu bilden, der zweite Verbindungsabschnitt (92) an dem Seitenaufprallblock (4) angeordnet ist, der zweite Verbindungsabschnitt (92) einen zum Verbindungselement (911) passenden Montagehohlraum (920) aufweist und das Verbindungselement (911) dazu ausgelegt ist, in den Montagehohlraum eingesetzt zu werden, sodass der erste Verbindungsabschnitt (91) abnehmbar mit dem zweiten Verbindungsabschnitt (92) verbunden ist.

## Revendications

1. Siège de sécurité de véhicule, **caractérisé en ce qu'**il comprend :
une partie siège (1) comprenant un dossier (11), une base (12), deux flancs supérieurs (13) formés en s'étendant vers l'avant à partir de deux côtés du dossier (11), et deux flancs inférieurs (14) formés en s'étendant vers le haut à partir de deux côtés de la base (12), des passages de ceinture de siège (15) étant prévus entre les flancs supérieurs (13) et les flancs inférieurs (14) pour permettre à une ceinture ventrale d'une ceinture de siège de véhicule de passer à travers ceux-ci ;
un dispositif ISOFIX (2) agencé au niveau de la base (12) et utilisé pour être connecté à un point d'ancrage sur le siège de véhicule, comprenant un connecteur ISOFIX (21), un rail de guidage (22), un élément de verrouillage (23), et un verrou secondaire (24), dans lequel le rail de guidage (22) est agencé au niveau de la base (12), le connecteur ISOFIX (21) est agencé de manière coulissante au niveau du rail de guidage (22), l'élément de verrouillage (23) est utilisé pour verrouiller ou déverrouiller le mouvement du connecteur ISOFIX (21) le long du rail de guidage (22), et le verrou secondaire (24) est utilisé pour verrouiller ou déverrouiller le mouvement de l'élément de verrouillage (23), de telle sorte que lorsque l'élément de verrouillage est verrouillé par le verrou secondaire (24), l'élément de verrouillage (23) ne peut pas déverrouiller le connecteur ISOFIX (21) ;
un appuie-tête (3) agencé, la hauteur étant réglable, sur le dossier au moyen d'une structure de réglage d'appuie-tête, les extrémités inférieures de deux côtés de l'appuie-tête étant respectivement pourvues d'une fente de guidage (30) de telle sorte que la ceinture de siège de véhicule est adaptée à passer à travers la fente de guidage ; et
deux blocs d'impact latéraux (4) montés respectivement de manière détachable sur les côtés extérieurs des deux flancs supérieurs (13).

2. Siège de sécurité de véhicule selon la revendication 1, caractérisé ce qu'il comprend en outre deux guides de ceinture ventrale (5), dans lequel les unes extrémités des deux guides de ceinture ventrale sont fixées respectivement aux extrémités inférieures des deux flancs supérieurs (13), les autres extrémités de ceux-ci s'étendent en direction des flancs inférieurs (14) respectifs, et un espace d'une certaine distance est prévu entre les guides de ceinture ventrale (5) et les flancs inférieurs (14) pour permettre à la ceinture de siège de véhicule d'entrer dans les passages de ceinture de siège (15) à travers l'espace, de telle sorte que la ceinture de siège de véhicule est maintenue dans les passages de ceinture de siège (15) par les guides de ceinture ventrale (5) .

3. Siège de sécurité de véhicule selon la revendication 1, **caractérisé en ce que** le siège de sécurité de véhicule comprend en outre une ceinture TT (61), dans lequel une extrémité de la ceinture TT est fixée à une extrémité supérieure du dossier (11), l'autre extrémité de la ceinture TT est pourvue d'un crochet de connexion (62), le crochet de connexion est adapté pour être connecté à un point d'ancrage sur le véhicule, une surface inférieure de la base (12) présente une partie de connexion, et le crochet de connexion (62) est adapté pour être monté de manière détachable sur la partie de connexion, de telle sorte que lorsque la ceinture TT (61) n'est pas utilisée, le crochet de connexion (62) est stocké par la partie de connexion.

4. Siège de sécurité de véhicule selon la revendication 1, **caractérisé en ce que** le siège de sécurité de véhicule comprend en outre une entretoise (71) pour régler l'angle entre la partie siège (1) et le siège de véhicule, dans lequel une première extrémité de l'entretoise est articulée de manière mobile sur la surface inférieure de la base (12) de telle sorte que l'entretoise (71) peut se déplacer vers l'avant et vers l'arrière par rapport à la base (12), et une deuxième extrémité de l'entretoise (71) peut se tourner vers le haut et le bas par rapport à la base, et la surface inférieure de la base est pourvue d'au moins deux parties de positionnement (72), la deuxième extrémité de l'entretoise (71) est adaptée pour être connectée de manière détachable aux parties de positionnement (72), les parties de positionnement (72) sont agencées de manière séquentielle au bas de la base dans une direction de mouvement de l'entretoise (71), et les parties de positionnement sont différentes dans la hauteur verticale, de telle sorte que lorsque la deuxième extrémité de l'entretoise (71) est connectée aux différentes parties de positionnement (72), l'entretoise forme différents angles avec la base.

5. Siège de sécurité de véhicule selon l'une quelconque des revendications 1-4, **caractérisé en ce que** la structure de réglage d'appuie-tête comprend :
un rail d'engrenage (81) agencé au niveau du dossier (11), le rail d'engrenage présentant une pluralité de fentes d'engrenage (810) dans une direction longitudinale ;
une unité d'engrenage (82), qui agencée de manière mobile au niveau de l'appuie-tête (3), de telle sorte que lorsque l'appuie-tête se déplace vers le haut et vers le bas le long du dossier (11), l'unité d'engrenage (82) est opposée aux fentes d'engrenage (810) en séquence, et lorsque 1'unité d'engrenage (82) est opposée à l'une des fentes d'engrenage (810), l'unité d'engrenage est adaptée pour se déplacer à l'intérieur ou à distance de la fente d'engrenage de manière à verrouiller ou déverrouiller l'appuie-tête (3) ;
un élément élastique (84), qui est agencé entre l'unité d'engrenage (82) et l'appuie-tête (3), et est adapté pour appliquer de manière continue une force d'action à l'unité d'engrenage (82) pour déplacer l'unité d'engrenage en direction de la fente d'engrenage (810) de manière à verrouiller l'appuie-tête (3) ; et
un élément de déverrouillage (83) comprenant une section fixe (831), une section de déformation (832), et une section mobile (833), dans lequel deux extrémités de la section de déformation (832) sont respectivement connectées à la section fixe (831) et la section mobile (833), la section fixe (831) est agencée fixement au niveau d'une extrémité inférieure de l'appuie-tête (3), la section mobile (833) s'étend vers une extrémité supérieure de l'appuie-tête (3), la section de déformation (832) est opposée à l'unité d'engrenage (82), la section de déformation (832) est déformée élastiquement au moyen d'une application d'une force externe à la section mobile (833), et lorsque la section de déformation (832) est déformée élastiquement, l'unité d'engrenage (82) est entraînée à se déplacer de manière à déverrouiller l'appuie-tête (3).

6. Siège de sécurité de véhicule selon l'une quelconque des revendications 1-4, **caractérisé en ce que** le bloc d'impact latéral (4) est monté de manière détachable sur le flanc supérieur (13) au moyen d'une structure de montage de bloc d'impact latéral qui comprend une première partie de connexion (91) et la deuxième partie de connexion (92), dans lequel une extrémité arrière de la première partie de connexion (91) est connectée au flanc supérieur (13), une extrémité avant de la première partie de connexion fait saillie du flanc supérieur (13) pour former un élément de connexion (911), la deuxième partie de connexion (92) est agencée au niveau du bloc d'impact latéral (4), la deuxième partie de connexion (92) présente une cavité de montage (920) s'appariant à l'élément de connexion (911), et l'élément de connexion (911) est adapté pour être inséré dans la cavité de montage, de telle sorte que la première partie de connexion (91) est connectée de manière détachable à la deuxième partie de connexion (92).
